## Europäisches Patentamt

## European Patent Office

## Office européen des brevets

(19)

(11) Veröffentlichungsnummer· **0 004 603**
**B1**

(12) **EUROPÄISCHE PATENTSCHRIFT**

(45) Veröffentlichungstag der Patentschrift:
01.07.81

(51) Int. Cl.³: **F 16 B 7/04**, E 04 B 5/55

(21) Anmeldenummer: 79100868.3

(22) Anmeldetag: 22.03.79

(54) Verbinder für zwei sich kreuzende Schienen.

(30) Priorität: 01.04.78 DE 2814095

(43) Veröffentlichungstag der Anmeldung:
17.10.79 Patentblatt 79/21

(45) Bekanntmachung des Hinweises auf die Patenterteilung:
01.07.81 Patentblatt 81/26

(84) Benannte Vertragsstaaten:
BE CH FR GB IT LU NL SE

(56) Entgegenhaltungen:
DE-A-2 109 596
DE-B-2 554 202
FR-A-2 119 566
US-A-2 994 113
US-A-3 965 343

(73) Patentinhaber: Helmut Stangel und Rainer Wichert
Decken- und Akustikbau, Buschstrasse 11b,
D-5800 Hagen (DE)

(72) Erfinder: Stangel, Helmut, Buschstrasse 11b,
D-5800 Hagen (DE)
Erfinder: Wichert, Rainer, Lützowstrasse 92a,
D-5800 Hagen (DE)

(74) Vertreter: Dörner, Lothar, Dipl.-Ing.,
Stresemannstrasse 15, D-5800 Hagen (DE)

## Verbinder für zwei sich kreuzende Schienen

Es ist bekannt, zur Befestigung von Zwischendecken Halteschienen zu verwenden, die ein U-förmiges Profil aufweisen und deren Schenkel an den Längskanten schräg nach innen abgewinkelt sind. Derartige Halteschienen werden teilweise — z. B. bei größerem Abstand von der bereits vorhandenen Decke — mit der Öffnung nach oben mit Hilfe von Schnellspannabhängern gehalten (vgl. DE-U-7 701 288); teilweise mit der Öffnung nach unten unmittelbar unter der bereits vorhandenen Decke befestigt. In beiden Fällen muß es möglich sein, kreuzende Schienen unter den bereits hängenden Halteschienen zu befestigen.

Aus der DE-B-2 554 262 ist ein Verbinder für zwei sich kreuzende, übereinanderliegende Schienen bekannt, die ein U-förmiges Profil aufweisen und an den Längskanten schräg nach innen abgewinkelt sind. Der Verbinder hat die Form eines U-förmigen Bügels, dessen Mittelstück die andere Schiene übergreift und dessen Schenkel eine Länge größer als die Höhe der zweiten Schiene aufweist. Bei dem bekannten Verbinder ist das freie Ende der Schenkel »hammerartig« verbreitert. Die abstrebenden Schenkel sind unterschiedlich lang. An jedem der längeren Schenkel ist außen eine Daumenstütze angebracht, die senkrecht zu dem Schenkel verläuft. Der bekannte Verbinder ist herstellungstechnisch aufwendig. Er ist — wegen des schmaleren Mittelstücks — wenig stabil, trotz der vorhandenen Sicke. Dies ist bedeutsam, da der Verbinder gegen die abgewinkelten Kanten in das U-Profil der Schienen gedrückt werden muß. Die vorhandenen Daumenstützen sind bei Verbindern der hier betrachteten Art Fremdkörper und unnötig.

Sowohl der im Patentanspruch 1 als auch der im Patentanspruch 2 umschriebenen Erfindung liegt die Aufgabe zugrunde, einen schnell und ohne Werkzeug anzubringenden, in Axialrichtung der Schienen verschiebbaren, aber senkrecht zur Schienenebene starren, außerdem sicher die Schienen haltenden Verbinder zu schaffen. Bei einer dargelegten Verwirklichung der Erfindung braucht der Bügel mit seinen Schenkeln lediglich in das U-Profil einer Schiene eingebracht und durch kurzes, von Hand durch Übergreifen der Schiene und des Bügels leicht vorzunehmendes Drücken in Richtung der Schenkel so weit bewegt zu werden, bis die abgewinkelten Kanten der Schiene in die Einschnitte einrasten. Die Einschnitte in den Kanten der Schenkel des Bügels und die Abwinklungen am Rand der Schienen haben vorzugsweise die gleiche Neigung.

Sie beträgt gegenüber der Vertikalen z. B. etwa 45° bzw. 225°. Das macht es praktisch unmöglich, daß nach dem Einrasten die Verbindung wieder gelöst werden kann, auch wenn eine Belastung entgegen der Einrastrichtung auftreten sollte. Andererseits soll die Schiene in den Schlitzen so viel Spiel haben, daß sie in Axialrichtung geführt in den Bügeln bewegt und somit ihre Lage korrigiert werden kann. Der Bügel kann in einem einfachen Stanz- und Biegevorgang hergestellt werden. Genügt es, daß der Bügel nur in eine Schiene eingreifen muß, sind an zwei sich gegenüberliegenden Kanten des Bügels zwei Schenkel vorgesehen, die mit dem Mittelstück ein U bilden, wobei dann das Mittelstück die Schiene umgreift, die sich mit der Schiene kreuzt, in die die Schenkel des Bügels einrasten. Sind beide sich kreuzende Schienen zu verklammern, sind an paarweise sich gegenüberliegenden Kanten des Mittelstücks nach entgegengesetzten Seiten abgewinkelte Schenkel vorgesehen.

Die im Patentanspruch 3 angegebene vorteilhafte Ausgestaltung jedes Schenkels erleichtert seine Führung innerhalb des U-Profils der Schiene und sein Einrasten.

Zwei Ausführungsbeispiele der Erfindung sind in der Zeichnung dargestellt und werden im folgenden näher beschrieben. Es zeigt

Fig. 1 in perspektivischer Darstellung zwei sich kreuzende Schienen, die durch einen Verbinder mit zwei Schenkeln verbunden sind,

Fig. 2 die Seitenansicht des in Fig. 1 dargestellten Verbinders,

Fig. 3 die Stirnansicht des in Fig. 1 dargestellten Verbinders,

Fig. 4 in perspektivischer Darstellung zwei sich kreuzende Schienen, die durch einen Verbinder mit vier Schenkeln verbunden sind,

Fig. 5 die Seitenansicht des in Fig. 4 dargestellten Verbinders,

Fig. 6 die Stirnansicht des in Fig. 4 dargestellten Verbinders.

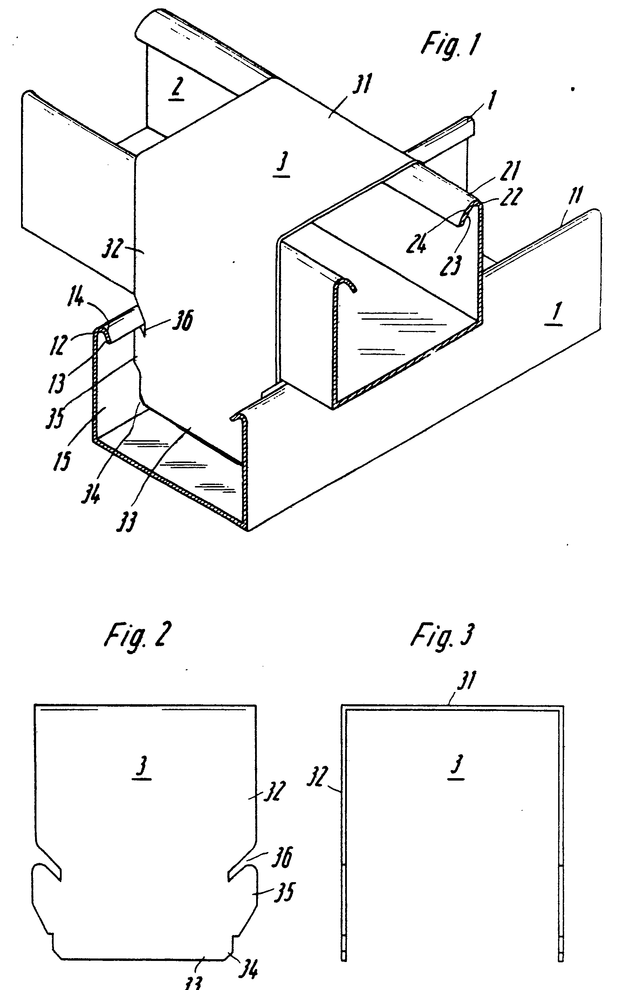

Zwei sich kreuzende Schienen 1, 2 sind durch einen Verbinder 3 miteinander verbunden. Von den Schienen ist — willkürlich — die eine Schiene 2 als Halteschiene, die andere Schiene 1 als kreuzende Schiene bezeichnet. In den Ausführungsbeispielen weisen — wie in der Praxis üblich — die Halteschiene 2 und die kreuzende Schiene 1 das gleiche Profil auf. Dies ist bei dem in Fig. 1 dargestellten Ausführungsbeispiel nicht notwendig: Der Verbinder 3 kann eine beliebige Halteschiene umgreifen. Mit dem Verbinder 3 können auch unterschiedliche U-Profile an sich kreuzenden Stellen miteinander verbunden werden. Es ist dann lediglich notwendig, die Schenkel der Verbindung 1 den Profilen anzupassen.

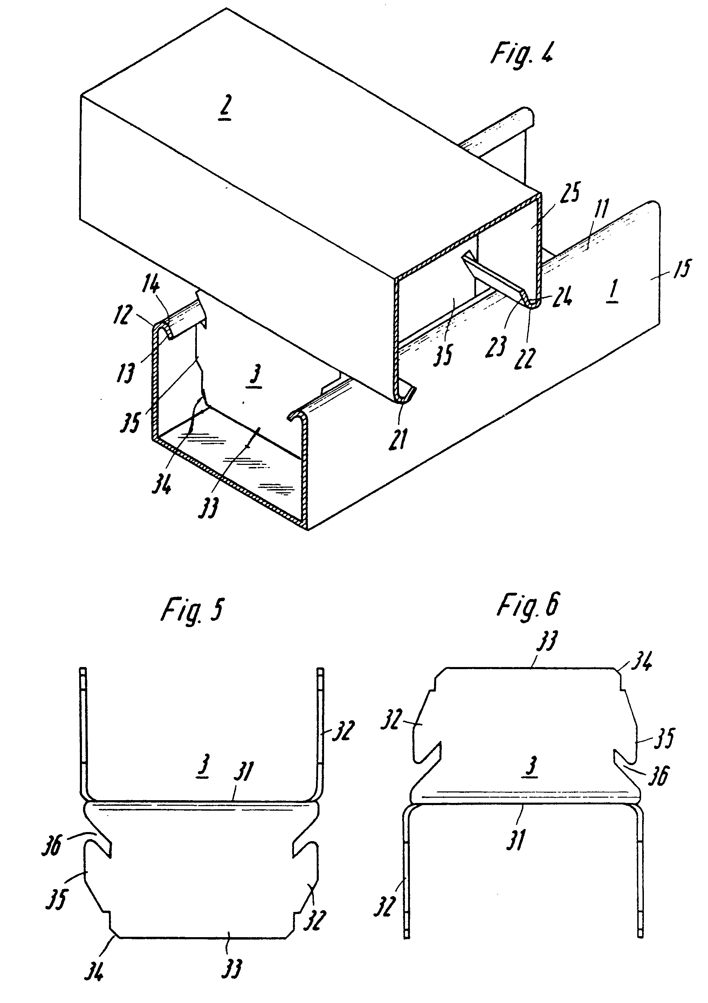

Die zu haltende Zwischendecke wird an den Schienen 1, 2 befestigt. Sowohl die kreuzende Schiene 1 als auch die Halteschiene 2 sind U-förmig ausgebildet. An ihren Längskanten 11, 21 sind die Schienen 1, 2 nach innen abgewinkelt. Die Winkel 12, 22 bilden so auf ihrer Unterseite 13, 23 eine Angriffsfläche, auf ihrer Oberseite 14, 24 eine Stützfläche für den Verbinder 3. Bei dem in Fig. 1 dargestellten Ausführungsbeispiel sind die Öffnungen beider Schienen 1, 2 nach derselben Seite ausgerichtet. Der Verbinder 3 umgreift die Halteschiene 2 und ist mit der kreuzenden Schiene 1 verklammert. Bei dem in Fig. 4 dargestellten Ausführungsbeispiel sind die U-Profile der kreuzenden Schiene 1 und der Halteschiene 2 einander zugewandt. Beide Schienen 1, 2 werden durch den Verbinder 3 miteinander verklammert.

Der Verbinder 3 weist ein im wesentlichen rechteckiges Mittelstück 31 auf. Materialeinheitlich mit dem Mittelstück 31 hergestellt sind Schenkel 32, die an den Kanten des Mittelstücks 31 rechtwinklig zu diesem abgebogen sind. Jeder Schenkel 32 ist am freien Ende als Führungsstück 33 ausgebildet. Die Breite des Führungsstücks 33 ist geringer als der Abstand der abgewinkelten Längskanten 11, 21 der jeweils zugehörigen Schiene 1, 2. Jedes Führungsstück 33 ist mit abgeschrägten Ecken 34 versehen. Im Anschluß an das Führungsstück 33 ist an jeder Kante des Schenkels 32 eine schräg von dem Führungsstück 33 weg verlaufende Nase 35 vorgesehen. Auf der dem Führungsstück 33 abgewandten Seite ist die Nase durch einen schrägen Einschnitt 36 begrenzt. Jeder Schenkel 32 wird zur Herstellung der Verbindung zwischen der kreuzenden Schiene 1 und der Halteschiene 2 mit seinem Führungsstück 33 zwischen das U-Profil der zugehörigen Schiene gesteckt, bis die Nase 35 mit ihrer auflaufenden Kante an den Längskanten 11 oder 21 der zugehörigen Schiene 1 oder 2 anliegt. Die abgeschrägten Ecken 34 begünstigen dabei die Führung des Schenkels 32. Durch kurzes Andrücken des Verbinders 3 in das U-Profil der zugehörigen Schiene 1 oder 2 spreizen sich deren Schenkel 15 oder 25, während die Nase 35 an den Innenkanten der Winkel 12 oder 22 vorbeigedrückt werden. Schließlich rasten die Längskanten 11 oder 21 mit ihren Winkeln 12 oder 22 in den zugehörigen Einschnitt 36 ein. Die Lösung der Verbindung ist erschwert, da die freie Kante des Schenkels 32 auf den Boden der Schiene 1 oder 2 aufstößt, bevor die Winkel vollständig aus den Ausschnitten 36 ausgestoßen werden; in entgegengesetzter Richtung ist der Einschnitt 36 mit der Unterseite 13 oder 23 des Winkels 12 oder 22 nach Art einer Klammer verbunden.

Zwischen Unterseite 13 oder 23 und Oberseite 14 oder 24 und Einschnitt 36 ist andererseits so viel Spiel, daß die Schienen 1 oder 2 in ihrer Längsrichtung bewegt werden können und somit ihre Lage korrigiert werden kann.

Bei dem in den Fig. 1 bis 3 dargestellten Ausführungsbeispiel bilden das Mittelstück 31 und die Schenkel 32 einen U-förmigen Bügel. Das Mittelstück 31 umgreift in diesem Ausführungsbeispiel die Halteschiene 2. Die Breite der Schenkel 32 ist im wesentlichen gleich der lichten Weite der kreuzenden Schiene 1. Die Länge der Schenkel 32 ist größer als die Höhe der Halteschiene 2.

Bei dem in den Fig. 4 bis 6 dargestellten Ausführungsbeispiel bilden das im wesentlichen rechteckige Mittelstück 31 und die Schenkel 32 einen Bügel, bei dem die Schenkel an gegenüberliegenden Kanten des Mittelstücks paarweise in entgegengesetzten Richtungen abgewinkelt sind. Hier weist jeder Schenkel 32 eine Breite im wesentlichen gleich der lichten Weite der zugehörigen Schiene 1 oder 2 auf.

## Patentansprüche

1. Verbinder für zwei sich kreuzende Schienen, nämlich eine kreuzende Schiene (1) und eine Halteschiene (2), von denen mindestens die kreuzende Schiene (1) ein U-förmiges Profil aufweist und an den Längskanten (11) schräg nach innen abgewinkelt ist, in der Form eines U-förmigen Bügels, dessen Mittelstück (31) die Halteschiene (2) übergreift und dessen Schenkel (32) eine Länge größer als die Höhe der Halteschiene (2) aufweisen, dadurch gekennzeichnet, daß der U-förmige Bügel eine Breite im wesentlichen gleich der lichten Weite der kreuzenden Schiene (1) aufweist und daß jeder Schenkel (32) an jeder Seitenkante mit einem schrägen Einschnitt (36) versehen ist, in den der abgewinkelte Teil (12) der Längskante (11) der kreuzenden Schiene (1) einrastet.

2. Verbinder für zwei sich kreuzende Schienen (1, 2), die beide ein U-förmiges Profil aufweisen und an den Längskanten (11, 21) schräg nach innen abgewinkelt sind, in der Form eines Bügels mit einem im wesentlichen rechteckigen Mittelstück (31), dadurch gekennzeichnet, daß an gegenüberliegenden Kanten paarweise Schenkel (32) in entgegengesetzten Richtungen abgewinkelt sind, von denen jeder eine Breite im wesentlichen gleich der lichten Weite der zugehörigen Schiene (1, 2) aufweist und an jeder Seitenkante mit einem schrägen Einschnitt (36) versehen ist, in den der abgewinkelte Teil (12, 22) der Längskante (11, 21) der Schiene (1, 2) einrastet.

3. Verbinder nach Anspruch 1 oder 2, dadurch gekennzeichnet, daß jeder Schenkel (32) am freien Ende als Führungsstück (33) mit einer geringeren Breite als der Abstand der abgewinkelten Längskanten (11, 21) der zugehörigen Schiene (1, 2) und mit abgeschrägten Ecken (34) ausgebildet ist und daß im Anschluß an das Führungsstück (33) an jeder Kante eine schräg von dem Führungsstück (33) weg verlaufende Nase (35) vorgesehen ist, die von dem schrägen Einschnitt (36) mit gebildet ist.

## Claims

1. Connector for two intersecting rails, namely a crossing rail (1) and a retaining rail (2), of which at least the crossing rail (1) has a U-shaped section and is bent diagonally inwards on the longitudinal edges (11), the connector being in the form of a U-shaped clamp, the central piece (31) of which covers the retaining rail (2) and the sides of which (32) have al length greater than the height of the retaining rail (2), characterised in that the U-shaped clamp has a width substantially equal to the clear width of the crossing rail (1), and that each side (32) is provided on each lateral edge with an oblique notch (36) in which the bent part (12) of the longitudinal edge (11) of the crossing rail (1) engages.

2. Connector for two intersecting rails (1, 2), both of which have a U-shaped section and are bent obliquely inwards on the longitudinal edges (11, 21), the connector being in the form of a clamp having a substantially rectangular central piece (31), characterised in that on oppositely lying edges, pairs of sides (32) are bent in opposite directions, each of which sides has a width substantially equal to the clear width of the associated rail (1, 2) and is provided on each lateral edge with an oblique notch (36) in which the bent part (12, 22) of the longitudinal edge (11, 21) of the rail (1, 2) engages.

3. Connector according to Claim 1 or 2, characterised in that the free end of each side (32) is in the form of a guide piece (33) having a width less than the distance between the bent longitudinal edges (11, 21) of the associated rail (1, 2) and with bevelled corners (34), and that the guide piece (33) is followed at each edge by a projection (35), which extends obliquely away from the guide piece (33) and which is also formed by the oblique notch (36).


**Revendications**

1. Dispositif de liaison pour deux barres se croisant, à savoir une barre de croisement (1) et une barre de support (2) dont au moins la barre de croisement (1) présente un profil en forme de »U« et est recourbée en oblique vers l'intérieur sur ses rebords longitudinaux (11), sous forme d'un étrier en »U«, dont la partie centrale (31) recouvre la barre de support (2) et dont les branches (32) ont une longueur plus importante que la hauteur de la barre de support (2), caractérisé en ce que l'étrier en »U« a une largeur sensiblement égale à la largeur interne de la barre de croisement (1) et en ce que chaque branche (32) est pourvue sur chaque rebord latéral d'une entaille en oblique (36) dans laquelle pénètre la partie recourbée (12) du rebord longitudinal (11) de la barre de croisement (1).

2. Element de connexion pour deux barres se croisant (1, 2), les deux ayant un profil en »U« et étant repliées en oblique vers l'intérieur sur leur rebords longitudinaux (11, 21), sous forme d'un étrier comprenant une partie centrale sensiblement rectangulaire (31), caractérisé en ce que des branches (32) sont repliées dans des directions opposées par paires sur des rebords se faisant face, les branches ayant chacune une largeur sensiblement égale à la largeur interne des barres associées (1, 2) et étant pourvues sur chaque rebord latéral d'une entaille en oblique (36) dans laquelle pénètre la partie recourbée (12, 22) du rebord longitudinal (11, 21) des barres (1, 2).

3. Element de connexion selon les revendications 1 ou 2, caractérisé en ce que chaque branche (32) est constituée à son extrémité libre sous forme d'une pièce de guidage (33) ayant une largeur inférieure à la distance séparant les rebords longitudinaux repliés (11, 21) des barres associées (1, 2) et de coins en oblique (34), et en ce qu'au raccordement avec la pièce de guidage (33) est prévu à chaque coin un nez (35) allant en s'éloignant en oblique à partir de la pièce de guidage (33), lequel nez est constitué à partir de l'entaille en oblique (36).

Fig. 1

Fig. 2

Fig. 3

0 004 603

Fig. 4

2

25

11

14

15

12

13

24

1

35

23

22

35

3

34

21

33

Fig. 5

Fig. 6

32

33

34

3

31

32

35

36

35

3

36

35

31

34

33

32

32